# EUROPÄISCHE PATENTSCHRIFT

(11) **EP 0 927 627 B1**
(45) Veröffentlichungstag und Bekanntmachung des Hinweises auf die Patenterteilung: **13.11.2002**
(21) Anmeldenummer: 98123735.7
(22) Anmeldetag: 14.12.1998
(51) Int. Cl.: B29C 65/14

(54) **Verfahren zum Verbinden von Bauteilen**
Process to join components
Procédé pour assembler des composants

(30) Priorität: 02.01.1998 DE 19800036
(43) Veröffentlichungstag der Anmeldung: 07.07.1999
(73) Patentinhaber: Volkswagen Aktiengesellschaft, 38436 Wolfsburg (DE)
(72) Erfinder: Jaworski, Jens, 38524 Sassenburg (DE)
(74) Vertreter: Schneider, Henry, Dipl.-Ing.

(56) Entgegenhaltungen:
- US-A- 4 960 478
- PATENT ABSTRACTS OF JAPAN vol. 009, no. 121 (M-382), 25. Mai 1985 & JP 60 008042 A (NIPPON STYREN PAPER KK;OTHERS: 01), 16. Januar 1985

## Beschreibung

Die vorliegende Erfindung betrifft ein Verfahren zum Verbinden von Bauteilen aus expandiertem Polypropylen.

Expandiertes Polypropylen (EPP) ist ein Werkstoff, der bei der Verarbeitung von kompaktem Polypropylen (PP) zu einem Schaumstoff entsteht und ein eigenes Eigenschaftsprofil aufweist. Die Eigenschaften werden durch die Gerüstsubstanz und die Schaumstruktur des Polypropylen bestimmt. Die geschlossenzelligen Schaumstoffpartikel des EPP bestehen aus Polypropylen, dessen Zellgas Luft ist. Der Feststoffanteil ist in den Zellwänden und dem Zellgerüst konzentriert. Der Rest des Schaumstoffs, der im allgemeinen etwa 94 % bis 98 % ausmacht, besteht aus Luft als Zellgas. EPP-Partikelschäume enthalten keine Weichmacher und Treibmittel.

Die Verarbeitung von EPP-Partikeln zu Bauteilen erfolgt auf Formteilautomaten. Pneumatisch verdichtete Schaumstoffpartikel werden in ein geschlossenes, perforiertes Formwerkzeug eingebracht, das sich in einem druckfesten Raum befindet, und unter Heißdampf zu einem Schaumstoffteil verschweißt

Die aus dem Stand der Technik bekannten Verfahren zum Verbinden von Bauteilen aus expandiertem Polypropylen (EPP) untereinander bzw. zum Verbinden von EPP-Bauteilen mit anderen Bauteilen sind das Kleben, das Klemmen oder das Umschäumen von Einlegeteilen. Zum Beispiel werden EPP-Schaumkörper in Fahrradhelmen mit der Hartschale verklebt. Die Befestigungslaschen für den Kinnriemen bei diesen Fahrradhelmen werden bei der Produktion der EPP-Schaumkörper mit eingeschäumt. Das Erfordernis zwei EPP-Schaumkörper untereinander dauerhaft zu verbinden trat bislang deshalb weniger häufig auf, da man mit dem Werkstoff EPP die Möglichkeit hat, Formkörper mit fast beliebiger Geometrie herzustellen. Wenn man jedoch solche EPP-Bauteile miteinander verbunden hat, so erfolgte dies bislang meist durch Kleben. Diese Verklebung von EPP-Bauteilen hat jedoch den Nachteil, daß die Festigkeit im Verbindungsbereich nicht immer ausreichend bzw. genügend dauerhaft ist. Beim Verkleben von EPP-Bauteilen traten außerdem folgende Probleme auf:

Bei der Adhäsionsklebung sind die Bindungskräfte physikalischer Natur und basieren auf Nebenvalenzbindungen. Adhäsionsklebungen sind gut mit polaren Kunststoffen möglich, jedoch weniger gut mit nicht polaren Kunststoffen. Letztere können durch eine Oberflächenbehandlung "klebefreundlicher" gemacht werden. Da es sich bei EPP um einen unpolaren Kunststoff handelt ist eine auch langfristig feste Adhäsionsklebung nur mit einer vorherigen Oberflächenaktivierung (Koronabehandlung) möglich, was einen zusätzlichen Aufwand mit sich bringt.

Bei der Diffusionsklebung diffundieren Lösungsmittel, Monomere oder andere diffusionsfähige Bestandteile des Klebstoffs in den Kunststoff ein und bewirken durch Quellung und Lösen Molekularbewegungen, die zu einer homogenen Verbindung nach Art einer Schweißnaht führen. Durch die diffundierenden Anteile können die mechanischen Eigenschaften der Fügeteile im Bereich der Fügezone verändert werden, z. B. kann Spannungsrißbildung bei amorphen Thermoplasten auftreten. Das Polypropylen besitzt eine hohe Beständigkeit und ist mit gängigen halbwegs umweltfreundlichen Lösungsmitteln nicht anzulösen.

Aus der JP 60008042 ist ein Verfahren zur Herstellung eines kernmaterials für Stößfänger bekannt. Dabei werden zunächst die miteinander zu verbindenden Formstücke aus Polypropylen-Partikelschaumstoff durch Verschweißen der PP-Schaumstoffpartikel in einem Formraum durch Erhitzen hergestellt. Nachfolgen oder während des Formens werden die zu verbindenden Oberflächen mit Kerben definierter Abmessungen versehen. Das Verbinden schließlich erfolgt durch Zusammenstoßen der gekerbten Bereiche und durch deren Erhitzen.

Der vorliegenden Erfindung liegt daher die Aufgabe zugrunde, ein Verfahren zum Verbinden von Bauteilen aus expandiertem Polypropylen zu schaffen, das weniger aufwendig ist und dabei zu einer dauerhaften Verbindung der Bauteile mit guten Festigkeitswerten führt.

Die Lösung dieser Aufgabe liefert ein erfindungsgemäßes Verfahren zum Verbinden von Bauteilen aus expandiertem Polypropylen (Partikelschaum) mit den Merkmalen der unabhängigen Ansprüche. Erfindungsgemäß ist vorgesehen, daß man wenigstens eine der Fügeflächen der Bauteile wenigstens teilweise mittels IR-Strahlung erwärmt und danach die Fügeflächen der zu verbindenden Bauteile gegeneinanderpreßt und die Bauteile im Bereich der Fügeflächen miteinander verschweißt.

Ein derartiges Verschweißen der EPP-Bauteile nach teilweiser Erwärmung der Fügefläche wenigstens eines Bauteils mit Hilfe von IR-Strahlung ist als Verfahren einfacher als das Kleben, da zusätzliche vorbereitende Arbeitsgänge entfallen können.

Bei dem erfindungsgemäßen Verschweißen nach Erwärmung mit Infrarotstrahlung wirken in der Regel eine Strahlungsquelle (IR-Strahler) und der die emittierende Strahlung absorbierende Körper aus EPP, in dem die Strahlung in Wärme umgewandelt wird, zusammen. Durch die geringe Eindringtiefe der IR-Strahlung in das expandierte Polypropylen kommt es nur zu einer Erwärmung der Oberfläche, wobei bei genügend hoher Oberflächentemperatur die Oberfläche des EPP-Bauteils schmilzt. Werden nun die Schmelzflächen zweier EPP-Bauteile aneinander gepreßt, so kommt es zu einem Verschmelzen der beiden Oberflächen. Nach dem Erkalten der Schmelze sind die beiden EPP-Bauteile fest miteinander verschweißt. Es muß nicht die gesamte Fügefläche des einen Bauteils durch IR-Strahlung erwärmt werden, sondern bei bestimmten Anwendungen reicht es aus nur eine Teilfläche der Fügefläche zu erwärmen und diese dann gegen die erwärmte Fügefläche des anderen Bauteils zu pressen.

Die zu verschweißenden EPP-Bauteile können unterschiedliche Oberflächen besitzen. Man unterscheidet zwischen zwei Oberflächenarten des EPP, nämlich der glatten und der gesägten Oberfläche. Bei der Erwärmung mittels IR-Strahlung verhalten sich diese beiden Oberflächen unterschiedlich. Die glatte Oberfläche besteht aus den geschlossenen Zellwänden der EPP-Partikel. Eine solche geschlossenzellige Oberfläche bildet sich in der Regel durch den Fügedruck an der Oberfläche des Werkzeugs bei der Herstellung eines EPP-Formteils. Diese Herstellung erfolgt in der Regel auf Formteilautomaten, wobei man z.B. in einem geschlossenen meist perforierten Formwerkzeug, das sich in einem druckfesten Raum befindet, vorzugsweise pneumatisch verdichtete Schaumstoffpartikel z.B. unter Heißdampf zu einem Schaumstoffteil verschweißt. Die EPP-Partikel werden gegen die Werkzeuge angepreßt und verschmelzen da zu einer glatten Oberfläche.

Die offenzellige gesägte Oberfläche von EPP-Bauteilen entsteht dagegen z.B. beim Zerschneiden von Formkörpern. Im Rahmen des vorliegenden Verfahrens ist das Verbinden von Bauteilen aus expandiertem Polypropylen mit glatter Oberfläche besonders bevorzugt.

Die Zellen des EPP-Probekörpers mit glatter Oberfläche sind in der Regel im Oberflächenbereich abgeflacht. Erfahren diese eine Erwärmung durch die Einwirkung der IR-Wärmestrahlung, dann kommt es zu einem Aufblähen des Bauteils im Bereich der glatten Oberfläche. Durch die Ausdehnung der in den EPP-Partikel eingeschlossenen Luft während der Erwärmung bis zum Anschmelzpunkt des EPP bläht sich die obere EPP-Partikelschicht auf. Die Zellwände gehen während der Erwärmung in einen zähelastischen, viskosen Zustand über und sind so in der Lage, sich nach oben auszudehnen. Eine seitliche Expansion ist nicht möglich, da die EPP-Partikel in der Umgebung ebenfalls das Bestreben haben sich auszudehnen und der seitlich wirkenden Kraft entgegenwirken. Daher erfolgt bei Wärmeeinwirkung von oben her in der Regel auch nur eine Ausdehnung der EPP-Partikel im Oberflächenbereich in einer Raumrichtung, nämlich nach oben hin. Dieses Ausdehnen wird dadurch unterstützt, daß bei der Formteilherstellung im Werkzeug die obere Partikelschicht an der Werkzeugoberfläche flach gedrückt wird. Bei der Erwärmung und Expansion nehmen diese Partikel im Oberflächenbereich wieder eine runde Ausgangsform an, d.h. es kommt insgesamt zu einem Aufblähvorgang. Zu Beginn der Erwärmung erhöht sich dabei aufgrund der steigenden Temperatur der Druck in den Partikeln. Unterhalb des Fließbereiches ist ein Ausdehnen der Partikel nicht möglich. Nach Erreichen des Fließbereiches in dem das EPP viskos und zähelastisch ist, dehnen sich die Partikel aus und wandeln so die Energie des Drucks in Expansionsarbeit um.

Wenn man nun im Rahmen des erfindungsgemäßen Verfahrens nur Teilbereiche der Fügeflächen der zu verbindenden Bauteile erwärmt, dann erfolgt ein Aufblähen der Oberfläche nur in diesen erwärmten Teilbereichen. Man kann bei der Verbindung zweier Bauteile beide Fügeflächen der Bauteile ganz erwärmen oder nur Teilbereiche einer oder beider Fügeflächen erwärmen. Diese erwärmten Teilbereiche der jeweiligen Fügeflächen können unterschiedlich groß sein, so daß dann eine in Flächenbereichen erwärmte Fügefläche des einen Bauteils auf eine nicht erwärmte Fügefläche des anderen Bauteils trifft. Es hängt von den Umständen (Festigkeit) ab, wie groß die jeweils erwärmte Fügefläche des einzelnen Bauteils bzw. die gesamte erwärmte Fügefläche beider Bauteile zu sein hat.

Im Rahmen des erfindungsgemäßen Verfahrens kann man auch mehr als zwei Bauteile entsprechender Geometrie gleichzeitig miteinander verschweißen.

Durch das Aufblähen der Oberfläche bei der Erwärmung einer glatten Oberfläche eines EPP-Bauteils durch IR-Strahlung ergibt sich ein Aufmaß in Richtung senkrecht zur Fügefläche. Dieses Aufmaß beträgt vorzugsweise 1% bis 15% und weiter vorzugsweise 3 % bis 10 % in Richtung senkrecht zur Fügefläche, d. h. bezogen auf die Höhe des Bauteils. Gleichzeitig oder alternativ wird die Expansion auf 0,1 -3 mm, insbesondere
0,2 - 2 mm und besonders vorteilhaft 0,8 - 1,5 mm begrenzt.

Um nur eine Erwärmung von Teilbereichen der Fügefläche eines Bauteils zu erzielen, werden die nicht zu erwärmenden Teilbereiche gegen die einwirkende Infrarot-Wärmestrahlung abgeschattet. Dieses Abschatten kann man beispielsweise durch Blenden vornehmen, die man zwischen den IR-Strahlern und der zu erwärmenden Fügefläche anordnet.

Die in den Unteransprüchen genannten Merkmale betreffen bevorzugte Weiterbildungen des erfindungsgemäßen Verfahrens.

Die Erfindung betrifft außerdem Bauteile, die durch Verbinden von Bauteilen aus expandiertem Polypropylen nach einem Verfahren mit den Merkmalen des Hauptanspruchs oder eines der Unteransprüche hergestellt sind. Derartige nach einem erfindungsgemäßen Verfahren hergestellt Bauteile eignen sich z. B. für die Verwendung im Automobilbau.

Weitere Vorteile der Erfindung ergeben sich aus der nachfolgenden Detailbeschreibung.

Die Erfindung wird nun an Hand von Ausführungsbeispielen unter Bezugnahme auf die beiliegenden Zeichnungen näher beschrieben. Dabei zeigen
- Fig. 1: eine schematisch vereinfachte Ansicht einer Einrichtung zur Erwärmung der Fügefläche eines EPP-Probekörpers durch Infrarotstrahlung nach der erfindungsgemäßen Verfahren;
- Fig. 2a bis 2d: zeigen in vier Ansichten das Verhalten eines Bauteiles aus EPP bei Erwärmung mit IR-Strahlung;
- Fig. 3: zeigt eine schematisch vereinfachte Ansicht einer Einrichtung zur teilweisen Bestrahlung der Oberfläche eines EPP-Bauteils mit IR-Strahlung;
- Fig. 4a: zeigt zwei zu verbindende Bauteile aus EPP vor dem Verschweißen;
- Fig. 4b: zeigt die gleichen Bauteile nach dem Verschweißen;
- Fig. 5: zeigt ein Bauteil mit gesägter EPP-Oberfläche nach der Erwärmung;
- Fig. 6: zeigt einen EPP-Probekörper mit gesägter Oberfläche gemäß einer weiteren Variante der Erfindung;

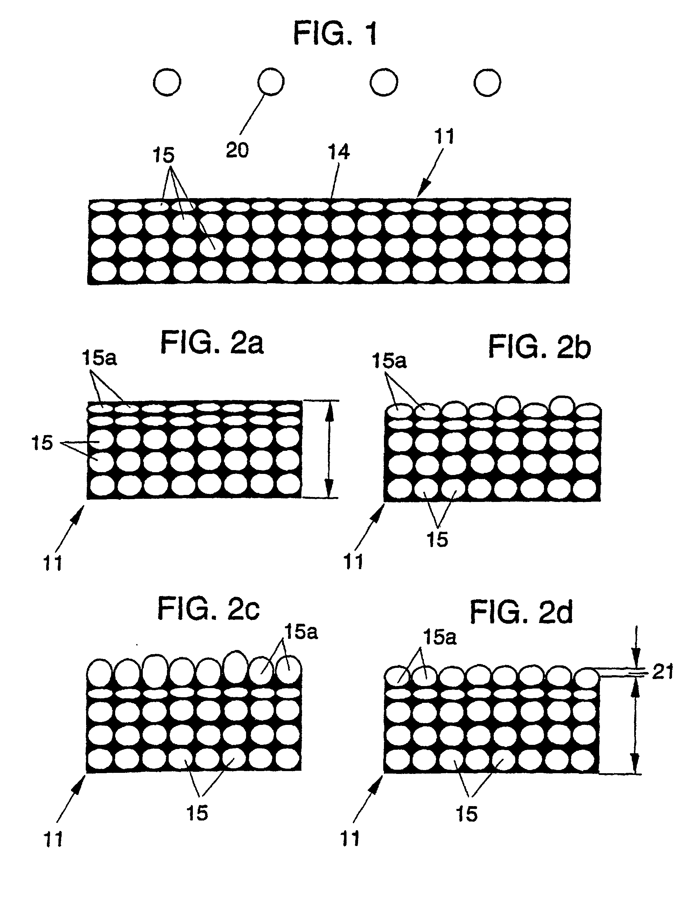

Zunächst wird auf Fig. 1 Bezug genommen. Die Darstellung zeigt ein Bauteil 11 aus expandiertem Polypropylen (EPP-Probekörper), dessen Oberfläche 14 nach dem erfindungsgemäßen Verfahren durch Infrarotwärmestrahler 20, die über dem Bauteil mit Abstand zu diesem angeordnet sind, bestrahlt und somit erwärmt wird. Es handelt sich bei dem Ausführungsbeispiel gemäß Fig. 1 um ein Bauteil 11 aus EPP mit einer geschlossenen Oberfläche 14. Wie man sieht besteht das im Schnitt dargestellte Bauteil 11 aus einer Vielzahl miteinander verbundener Schaumstoffpartikel 15, wobei diese in der obersten Schicht flach gedrückt sind, was von dem Herstellungsverfahren des Bauteils 11 herrührt, worauf weiter unten noch näher eingegangen wird.

Die Oberfläche 14 des Bauteils 11 entspricht der späteren Fügefläche, wobei man durch die IR-Wärmestrahler 20 die Fügefläche 14 vollständig erwärmen kann oder nur eine Teilfläche.

Das Verhalten des EPP-Probekörpers mit abgeflachten Schaumstoffpartikeln 15 im Oberflächenbereich wie sie auch bei dem Bauteil gemäß Fig. 1 vorhanden sind, bei Einwirkung von IR-Wärmestrahlung wird unter Bezugnahme auf die Figuren 2a bis 2d näher erläutert. Fig. 2a zeigt einen EPP-Probekörper 11 mit glatter Oberfläche 14 ähnlich wie in Fig. 1 vor der Erwärmung. Die Schaumstoffpartikel aus denen sich das Bauteil 11 zusammensetzt sind mit 15 bezeichnet. Die abgeflachten Schaumstoffpartikel in der obersten Schicht haben das Bezugszeichen 15a.

In Fig. 2b ist die von oben her einwirkende Infrarotwärmestrahlung durch die Pfeile 20a gekennzeichnet. Wie man sieht sind die Schaumstoffpartikel 15a in der obersten Schicht durch die Erwärmung bereits soweit aufgebläht, daß sie an Stelle der flachovalen Form mehr kugelförmig sind, da sie sich nach oben hin ausdehnen. Nach unten hin können sie sich dagegen nicht ausdehnen, da dort weitere Schichten von Schaumstoffpartikeln 15 dies verhindern.

Fig. 2c zeigt den Zustand des EPP-Bauteils 11 während der weiteren Erwärmung. Die Schaumstoffpartikel 15a der obersten Schicht blähen sich weiter auf, verlassen dadurch die Kugelform und haben im Querschnitt eine eher ovale Form mit größter Ausdehnung in vertikaler Richtung.

Fig. 2d zeigt schließlich den Zustand des EPP-Bauteils 11 mit glatter Oberfläche nach dem Abkühlen. Wie man sieht haben sich die Schaumstoffpartikel 15a der obersten Schicht gegenüber der Darstellung gemäß Fig. 2c wieder etwas zusammengezogen und haben annähernd eine Kugelform ähnlich wie die übrigen Schaumstoffpartikel 15. Während der Abkühlung zieht sich die Luft in den EPP-Partikeln 15a zusammen, so daß diese schrumpfen. Nach dem Abkühlen unterhalb des Fließbereiches ist kein Schrumpfen der Partikel 15a mehr möglich, so daß bei weiterer Abkühlung der Luft ein Unterdruck in den Partikeln entsteht. Dieser läßt im Laufe einiger Tage nach, da durch die EPP-Oberfläche 14 Luftmoleküle in die Partikel 15a diffundieren.

Durch Vergleich der Höhe des EPP-Bauteils 11 das in Fig. 2d dargestellt ist mit derjenigen des EPP-Bauteils 11 vor der Erwärmung gemäß der Darstellung nach Fig. 2a ergibt sich das Aufmaß des Bauteils 11 in Folge der Erwärmung und wieder Abkühlung in Richtung senkrecht zur Oberfläche 14 und damit zur späteren Fügefläche. Wie Messungen ergeben haben, kann dieses Aufmaß, das jeweils durch den Pfeil 21 kenntlich gemacht ist beispielsweise 3% bis 10 % betragen.

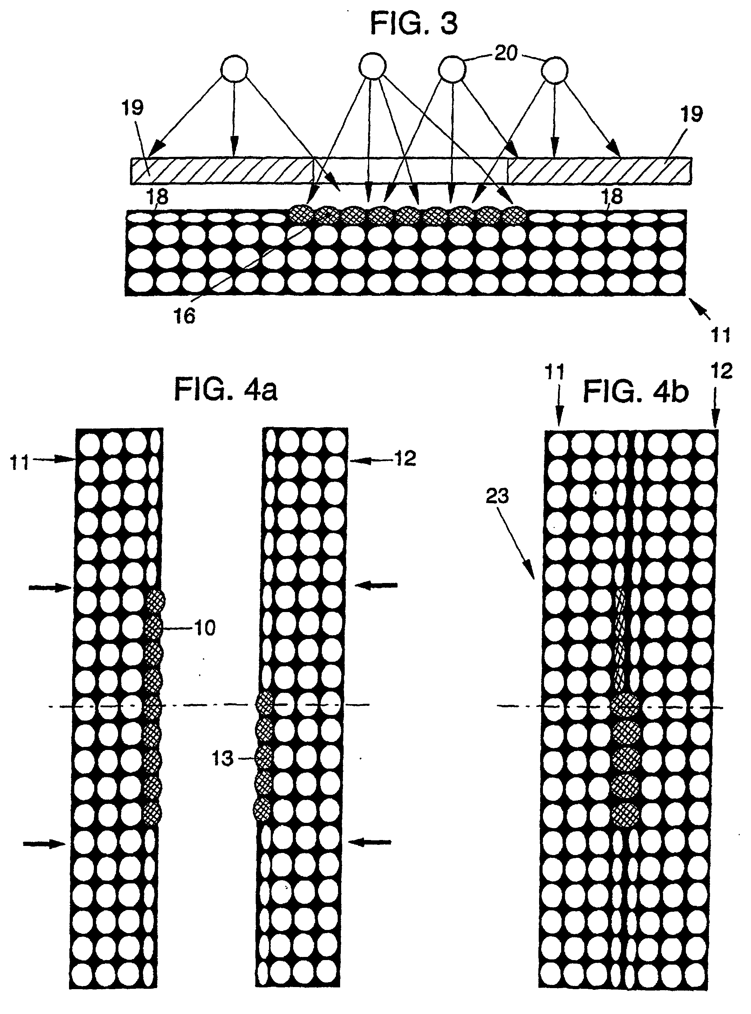

Nachfolgend wird auf Fig. 3 Bezug genommen und an Hand dieser Darstellung der Versuchsaufbau bei der nur teilweisen Erwärmung der Fügefläche eines EPP-Probekörpers 11 erläutert. Zur Erwärmung der Oberfläche 14 sind hier wiederum Infrarotstrahler 20 über dem EPP-Bauteil 11 angeordnet. Es werden jedoch hier Blenden 19 verwendet um einen Teilbereich 18 der Oberfläche 14 des EPP-Bauteils 11 gegen die IR-Strahlung abzuschatten. Dieser abgeschattete Teilbereich 18 liegt wie man sieht bei dem Bauteil 11 jeweils rechts und links, während dazwischen ein erwärmter Teilbereich 16 liegt, in dem sich die EPP-Partikel im Oberflächenbereich ausdehnen, da dort die IR-Strahlung nicht abgeschirmt wird.

Die Tatsache, daß man so teilweise aufgeblähte Bereiche 16 der Fügefläche erhält, kann man bei der Verbindung mit anderen EPP-Bauteilen nutzen. Durch diese Aufblähung steht der nicht abgeschattete Teilbereich 16 etwas gegenüber diesen abgeschatteten Teilbereichen 18, die ja kein Aufmaß in Richtung senkrecht zur Fügefläche haben, vor und bildet eine Art Steg 22. Durch diese Stege kann die Verbindung mit weiteren EPP-Bauteilen nach dem erfindungsgemäßen Verfahren erleichtert werden. Es erübrigt sich somit, solche Stege 22 anderweitig zu erzeugen, denn sie ergeben sich durch das Expandieren der Schaumstoffpartikel bei der Erwärmung quasi von selbst.

Im Rahmen der vorliegenden Erfindung wurde auch untersucht, wie sich eine erwärmte und aufgeblähte Fügefläche wie z. B. der Teilbereich 16 in Fig. 3 verhält, wenn sie auf den abgeschatteten Bereich, d. h. also den kalten Bereich, einer zweiten Fügefläche eines zweiten Bauteils 12 trifft. Dazu wurden zwei miteinander zu verbindende Bauteile 11, 12 mit IR-Strahlung unter teilweiser Abschattung durch Blenden 19 so behandelt, daß die zu verbindenden Fügeflächen der Bauteile 11, 12 unterschiedlich große Abmessungen hatten, wie dies in Fig. 4a dargestellt ist. Hier hat das linke Bauteil 11 eine größere erwärmte Fügefläche 10 und das rechte Bauteil 12 hat eine kleinere erwärmte und somit aufgeblähte Fügefläche 13. Die beiden Bauteile werden in dem erfindungsgemäßen Verfahren in Pfeilrichtung, d.h. senkrecht zu ihren jeweiligen Fügeflächen 10 bzw. 13 gegeneinandergepreßt. Dabei trifft zwangsläufig ein Teil der erwärmten Fügefläche 10 des linken Bauteils 11 auf die kalte Fügefläche 13 des rechten Bauteils 12.

Das Ergebnis dieses Arbeitsschritts zeigt Fig. 4b. Dort sieht man die beiden miteinander verbundenen Bauteile 11, 12 nach dem Aufeinanderpressen und miteinander Verschweißen. Es konnte festgestellt werden, daß in dem Bereich in dem zwei erwärmte Flächen aufeinander treffen, dies ist in den Fig. 4a und 4b die untere Hälfte der beiden Bauteile 11, 12, eine Verschweißung erfolgt. Dort wo eine erwärmte auf eine nicht erwärmte Fläche trifft (in der oberen Hälfte der Fügeflächen 10 bzw. 13 der beiden Bauteile 11, 12 in Fig. 4a bzw. 4b) gehen die aufgeblähten EPP-Partikel unter dem Fügedruck auf das Ausgangsmaß zurück. Es entsteht somit kein Aufmaß, das bei der Auslegung von Fügeteilen berücksichtigt werden muß. Diese Eigenschaft läßt sich bei einer Fertigung nutzen, da die Bereiche in denen zwei nicht erwärmte Flächen aufeinandertreffen als Bezugsflächen für das Sollmaß des Verbundbauteils dienen können. Die erwärmten Bereiche, in denen sich die Partikel des EPP aufblähen bzw. schmelzen sind in den Fig. 4a bzw. 4b dunkel dargestellt. Das Verbundbauteil ist mit 23 bezeichnet. In der oberen Hälfte der Zeichnung Fig. 4b hat zwischen den Fügeflächen der Ausgangsbauteile 11, 12 keine Verschweißung stattgefunden, wohingegen in der unteren Hälfte wegen des Aufeinandertreffens zweier erwärmter Flächen eine Verschweißung stattgefunden hat.

In weiteren Versuchen wurde untersucht, ob es möglich ist, in einem erfindungsgemäßen Verfahren zwei Bauteile auf ein vorgegebenes Sollmaß zu verschweißen. Für das Verbundbauteil wurde dabei ein Sollmaß in der Ausdehnungsrichtung senkrecht zu den Fügeflächen der Ausgangsbauteile festgelegt Die Fügeflächen der Bauteile wurden in der vorbeschriebenen Art erwärmt und die beiden Bauteile miteinander verschweißt. Es wurden auf diese Art verschiedene Verbundbauteile gefertigt und nach dem Abkühlen auf Zimmertemperatur wurden diese vermessen. Die Ergebnisse von fünf solchen Versuchen sind in der nachfolgenden Tabelle wiedergegeben.

| | Sollmaß [mm] | Toleranz | Istmaß Teil 2 [mm] | Istmaß Teil 1 [mm] | Istmaß ZSB [mm] | Sollmaß eingehalten |
|---|---|---|---|---|---|---|
| Versuch 1: | 40 | ± 0,49 | 20,3 | 19,8 | 40,3 | **JA** |
| Versuch 2: | 40 | ± 0,49 | 20,0 | 20,2 | 40,4 | **JA** |
| Versuch 3: | 40 | ± 0,49 | 19,9 | 21,3 | 40,3 | **JA** |
| Versuch 4: | 40 | ± 0,49 | 19,8 | 20,1 | 40,1 | **JA** |
| Versuch 5: | 40 | ± 0,49 | 20,3 | 19,9 | 40,3 | **JA** |

Die Verbundbauteile sind jeweils in der Tabelle mit ZSB bezeichnet. Es zeigt sich, daß die Sollmaße bei allen gefertigten Verbundbauteilen eingehalten wurden. Das Istmaß liegt zwar jeweils etwas oberhalb der Sollwerte, es liegt jedoch innerhalb der vorgegebenen Toleranz.

In weiteren Versuchen wurde durch Variieren der Größe der Blenden die Breite der nicht abgeschatteten erwärmten Bereiche der Fügefläche variiert. Bei diesen Versuchen ergab sich, daß es vorteilhaft ist, wenn eines der zu verbindenden Bauteile aus expandiertem Polypropylen wenigstens eine Ausdehnung von etwa 5 mm in einer Richtung, weiter vorzugsweise eine Breite von etwa 7,5 mm hat.

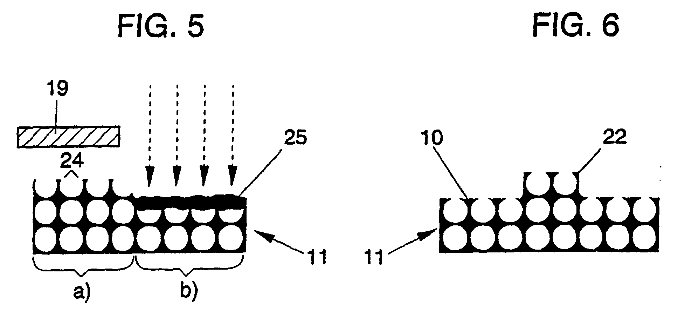

In einem Verfahren gemäß einer weiteren Variante der folgenden Erfindung wurden Bauteile aus expandiertem Polypropylen untersucht, die keine glatte sondern eine gesägte Oberfläche aufwiesen. Diese Oberflächen entstehen z. B. bei der Bearbeitung von EPP-Formkörpern mittels einer Fräse oder beim Sägen. In diesem Fall besteht der Oberflächenbereich des EPP-Bauteils 11 wie man aus Fig. 5a erkennen kann nicht aus einer geschlossenen EPP-Schicht wie bei der glatten Oberfläche, sondern die Oberfläche wird aus den nach oben gerichteten Zellwänden 24 der offenen Zellen der obersten Schicht gebildet.

Wenn man eine solche gesägte Oberfläche nun erwärmt, dann kommt es zu einem Wegschmelzen der Stege 24 und bei weiterer Erwärmung bildet sich eine geschlossene Schmelzschicht in dem erwärmten Bereich. Dies ist in Fig. 5 dargestellt. Der erwärmte Bereich ist hier mit 25 bezeichnet. Dieser Bereich 25 wurde der von oben einwirkenden IR-Strahlung ausgesetzt. Der linke Teilbereich in Fig. 5 wurde dagegen mit der Blende 19 abgeschattet, so daß dort kein Anschmelzen der Oberfläche zu verzeichnen ist und die Stege 24 stehen bleiben.

Das Wegschmelzen der Oberfläche kommt dadurch zustande, daß die Stege bei der Erwärmung in den viskosen zähelastischen Zustand übergehen. Die obere Schicht der Stege erreicht diesen Zustand eher und bildet eine Schmelze, die in die Zwischenräume zwischen den Stegen läuft. Da dieses Material nun nicht mehr als Steg zur Verfügung steht, erfolgt ein Zurückweichen der Oberfläche im erwärmten Bereich. Die Oberfläche geht also in dem erwärmten rechten Bereich 25 in der Zeichnung Fig. 5 unter das durch die Enden der Stege 24 gebildete Ausgangsmaß zurück.

Man kann den vorgenannten Effekt nutzen, indem man EPP-Bauteile 11 mit gesägter Oberfläche bei der Bestrahlung mit IR-Wärmestrahlung teilweise abschattet. Ein Bauteil 11 mit einem solchen Steg 22 ist in Fig. 6 dargestellt. Ein solches EPP-Bauteil 11 mit Steg 22 kann man z. B. durch Sägen herstellen. Die Höhe des Steges ist variabel und beträgt in den Ausführungsbeispielen gemäß Fig. 6 beispielsweise etwa 5 mm, d. h. der Steg hat beispielsweise ein Aufmaß von 5 % gegenüber der übrigen Höhe des Bauteils 11 senkrecht zur Fügefläche. Der Steg 22 ist schmaler als das gesamte Bauteil 11 in einer Ausdehnungsrichtung der Fügefläche, die hier mit 10 bezeichnet ist.

Man kann nun ein solches Bauteil 11 mit Steg 22 wie es in Fig. 6 dargestellt ist im Bereich des Stegs erwärmen und mit einem eben solchen Bauteil (nicht dargestellt) mit Steg, der ebenfalls erwärmt wurde so verbinden, daß die Stege der beiden Bauteile übereinander liegen. In diesem Fall ergibt sich ebenfalls eine gute Verbindung der Bauteile im Bereich ihrer Fügeflächen. Allerdings ist für das Sägen des Stegs 22 ein zusätzlicher Arbeitsgang erforderlich.

## Patentansprüche

1. Verfahren zum Verbinden von Bauteilen aus expandiertem Polypropylen, wobei man wenigstens eine der Fügeflächen (10, 13) der miteinander zu verbindenden Bauteile (11, 12) wenigstens teilweise mittels Infrarotstrahlung erwärmt und das Erwärmen im Bereich der Oberfläche des wenigstens (14) einen Bauteiles (11,12) solange durchführt, bis ein Aufblähen der Schaumsstoffpartikel (15) im Oberflächenbereich erfolgt, so dass ein Aufmaß des wenigstens einen Bauteiles (11, 12) senkrecht zur Fügefläche entsteht, und man danach die Fügeflächen (10, 13) der zu verbindenden Bauteile (11, 12) wenigstens teilweise überlappend gegeneinander presst und so die Bauteile (11, 12) im Bereich der Fügeflächen (10, 13) miteinander verschweißt.

2. Verfahren zum Verbinden von Bauteilen aus expandiertem Polypropylen, wobei man wenigstens eine der Fügeflächen (10, 13) der miteinander zu verbindenden Bauteile (11, 12) wenigstens teilweise mittels Infrarotstrahlung derart erwärmt, dass eine Tiefenwirkung der Infrarotstrahlung in der wenigstens eines Fügefläche (10, 13) auf die doppelte durchschnittliche Partikelgröße, insbesondere auf die 1,2-fache durchschnittliche Partikelgröße, begrenzt wird, so dass eine Blähwirkung nur bis in diese Tiefe erfolgt, und danach die Fügeflächen (10, 13) der zu verbindenden Bauteile (11, 12) wenigstens teilweise überlappend gegeneinander presst und so die Bauteile (11, 12) im Bereich der Fügeflächen (10, 13) miteinander verschweißt.

3. Verfahren zum Verbinden von Bauteilen nach einem der Ansprüche 1 oder 2, **dadurch gekennzeichnet, dass** man Bauteile (11) mit einer glatten Oberfläche im Bereich der Fügefläche (10) miteinander verbindet.

4. Verfahren zum Verbinden von Bauteilen nach einem der Ansprüche 1 bis 3, **dadurch gekennzeichnet, dass** das durch das Aufblähen bei Erwärmung entstehende Aufrnaß des wenigstens einen Bauteiles (11, 12) senkrecht zur Fügefläche zwischen etwa 1 % und etwa 15 %, vorzugsweise zwischen etwa 3 % und etwa 10 % und/oder 0,1 - 3 mm, insbesondere 0,2 - 1,8 mm, beträgt.

5. Verfahren zum Verbinden von Bauteilen aus expandiertem Polypropylen, wobei man nur Teilbereiche (16) wenigstens einer der Fügeflächen (10, 13) der zu verbindenden Bauteile (11, 12) mittels Infrarotstrahlung erwärmt und danach die Fügeflächen (10, 13) der zu verbindenden Bauteile (11, 12) wenigstens teilweise überlappend gegeneinander presst und so die Bauteile (11, 12) im Bereich der Fügeflächen (10, 13) miteinander verschweißt.

6. Verfahren nach Anspruch 5, **dadurch gekennzeichnet, dass**, bei der Erwärmung der Oberfläche Teilbereiche (18) der Fügefläche des Bauteils (11) abgeschattet und danach die Fügeflächen (10, 13) der zu verbindenden Bauteile (11, 12) wenigstens teilweise überlappend gegeneinander presst und so die Bauteile (11, 12) im Bereich der Fügeflächen (10, 13) miteinander verschweißt.

7. Verfahren zum Verbinden von Bauteilen nach Ansprüch 5 oder 6, **dadurch gekennzeichnet, dass** die erwärmten Teilbereiche (16) der Fügeflächen (10, 13) zu verbindender Bauteile (11, 12) unterschiedlich groß sind.

8. Verfahren zum Verbinden von Bauteilen nach Anspruch 6, **dadurch gekennzeichnet, dass** zur Abschattung der Teilbereiche (18) ein oder mehrere Blenden (19) verwendet werden, die zwischen den zu erwärmenden Oberflächen der Bauteile (11, 12) und den IR-Strahlern (20) angeordnet sind.

9. Verfahren zum Verbinden von Bauteilen nach Anspruch 8, **dadurch gekennzeichnet, dass** das Abstandsmaß zwischen der Blende (19), die einen Teilbereich (18) der Oberfläche abschattet, und dieser Oberfläche 0 mm bis etwa 20 mm, vorzugsweise zwischen 0 mm und etwa 10 mm, weiter vorzugsweise etwa 5 mm, beträgt.

10. Verfahren zum Verbinden von Bauteilen nach einem der Ansprüche 1 bis 9, **dadurch gekennzeichnet, dass** die Breite der Fügefläche (10, 13) wenigstens eines der Bauteile (11, 12) in wenigstens einer Raumrichtung wenigstens etwa 5 mm, vorzugsweise etwa 7,5 mm, beträgt.

11. Verfahren zum Verbinden von Bauteilen nach einem der Ansprüche 1 bis 10, **dadurch gekennzeichnet, dass** Bauteile aus expandiertem Polypropylen verwendet werden, die aus Schaumstoffpartikeln mit einem Feststoffvolumenanteil von vorzugsweise etwa 2 % bis etwa 6 % bestehen.

12. Verfahren zum Verbinden von Bauteilen nach einem der Ansprüche 1 bis 11, **dadurch gekennzeichnet, dass** mindestens eine der Fügeflächen mit Aufmaß hergestellt wird, insbesondere wenn die zu erwärmende Fügefläche nach dem Expandieren durchgetrennte Partikel enthält.

13. Bauteil vorzugsweise für den Automobilbau, **dadurch gekennzeichnet, dass** es durch Verbinden von Bauteilen gemäß einem Verfahren nach wenigstens einem der Ansprüche 1 bis 12 hergestellt wurde.

## Claims

1. Process for connecting components made from expanded polypropylene, wherein at least one of the joint surfaces (10, 13) of the components (11, 12) to be connected to one another is at least partially heated by means of infrared radiation, wherein the heating is continued in the region of the surface (14) of the at least one component (11, 12) until a swelling of the foam particles (15) in the surface region occurs, thereby causing an oversize of the at least one component (11, 12) vertical to the joint surface and wherein the joint surfaces (10, 13) of the components (11, 12) to be connected are subsequently pressed against one another in an at least partially overlapping manner, thereby welding the components (11, 12) to one another in the region of the joint surfaces (10,13).

2. Process for connecting components made from expanded polypropylene, wherein at least one of the joint surfaces (10, 13) of the components (11, 12) to be joined to one another is at least partially heated by means of infrared radiation in such a manner that a deep action of the infrared radiation in at least one of the joint surfaces (10, 13) is limited to double the average particle size, in particular to 1.2-times the average particle size, so that a swelling action occurs only to this depth, and wherein the joint surfaces (10,13) of the components to be connected (11, 12) are subsequently pressed against one another in an at least partially overlapping manner thereby welding the components (11, 12) to one another in the region of the joint surfaces (10, 13).

3. Process for connecting components according to any one of claims 1 or 2, **characterised in that** components (11) with a smooth surface in the region of the joint surface (10) are connected to one another.

4. Process for connecting components according to any one of claims 1 to 3, **characterised in that** the oversize of the at least one component (11, 12) resulting from the swelling caused by heating amounts to between approximately 1 % and approximately 15 %, preferably between approximately 3 % and approximately 10 % and/or 0.1-3 mm, in particular, 0.2-1.8 mm vertical to the joint surface.

5. Process for connecting components made from expanded polypropylene, wherein only partial regions (16) of at least one of the joint surfaces (10, 13) of the components (11, 12) to be connected are heated by means of infrared radiation and wherein the joint surfaces (10, 13) of the components (11, 12) to be connected are subsequently pressed together in an at least partially overlapping manner, thereby welding the components (11, 12) to one another in the region of the joint surfaces (10, 13).

6. Process according to claim 5, **characterised in that** during the heating of the surface, partial regions (18) of the joint surface of the component (11) are shielded, and that the joint surfaces (10, 13) of the components (11, 12) to be connected are subsequently pressed against one another in an at least partially overlapping manner, thereby welding the components (11, 12) to one another in the region of the joint surfaces (10, 13).

7. Process for connecting components according to claim 5 or 6, **characterised in that** the heated partial regions (16) of the joint surfaces (10, 13) of the components (11, 12) to be connected are of a different size.

8. Process for connecting components according to claim 6, **characterised in that** in order to shield the partial regions (18), one or more shield (19) is used, which is arranged between the surfaces of the component (11, 12) to be heated and the infrared sources (20).

9. Process for connecting components according to claim 8, **characterised in that** the spacing distance between the shield (19), which shields a partial region (18) of the surface, and this surface is 0 mm to approximately 20 mm, preferably between 0 mm and approximately 10 mm, and by further preference approximately 5 mm.

10. Process for connecting components according to any one of claims 1 to 9, **characterised in that** the width of the joint surface (10, 13) of at least one of the components (11, 12) in at least one direction in space is at least approximately 5 mm, preferably approximately 7.5 mm.

11. Process for connecting components according to any one of claims 1 to 10, **characterised in that** the components used are made from expanded polypropylene, which consists of foam particles with a preferred solid content of approximately 2 % to approximately 6 % by volume.

12. Process for connecting components according to any one of claims 1 to 11, **characterised in that** at least one of the joint surfaces is manufactured with an oversize, especially if the joint surface to be heated contains particles cut after expansion.

13. Component, preferably for motor vehicle construction, **characterised in that** it was manufactured by connecting components in accordance with a process according to at least one of claims 1 to 12.

## Revendications

1. Procédé pour relier des pièces structurelles en polypropylène expansé, procédé dans lequel on chauffe au moins partiellement, par rayonnement infrarouge, au moins l'une des faces de solidarisation (10, 13) des pièces structurelles (11, 12) devant être reliées, et l'on exécute le chauffage dans la région de la surface (14) de l'une des pièces structurelles (11, 12) jusqu'à ce qu'il se produise une expansion des particules de mousse (15), dans la région de ladite surface, ce qui provoque un surdimensionnement de la pièce structurelle (11, 12) prévue au minimum, perpendiculairement à la face de solidarisation, après quoi l'on presse les unes contre les autres les faces de solidarisation (10, 13) des pièces structurelles (11, 12) devant être reliées, au moins avec chevauchement artiel, en solidarisant ainsi les pièces structurelles (11, 12) par soudage, dans la région des faces de solidarisation (10, 13).

2. Procédé pour relier des pièces structurelles en polypropylène expansé, procédé dans lequel on chauffe au moins partiellement, par rayonnement infrarouge, au moins l'une des faces de solidarisation (10, 13) des pièces structurelles (11, 12) devant être reliées, de façon telle qu'une action en profondeur du rayonnement infrarouge, dans la face de solidarisation (10, 13) prévue au minimum, soit limitée au double de la grosseur moyenne de particules, notamment à 1,2 fois la grosseur moyenne de particules, de telle sorte qu'un effet d'expansion se produise uniquement jusqu'à cette profondeur, après quoi l'on presse les unes contre les autres les faces de solidarisation (10, 13) des pièces structurelles (11, 12) devant être reliées, au moins avec chevauchement partiel, en solidarisant ainsi les pièces structurelles (11, 12) par soudage, dans la région des faces de solidarisation (10, 13).

3. Procédé pour relier des pièces structurelles, selon l'une des revendications 1 ou 2, **caractérisé par le fait qu'**on solidarise, dans la région de la face de solidarisation (10), des pièces structurelles (11) à surface lisse.

4. Procédé pour relier des pièces structurelles, selon l'une des revendications 1 à 3, **caractérisé par le fait que** le surdimensionnement de la pièce structurelle (11, 12) prévue au minimum, se produisant perpendiculairement à la face de solidarisation par suite de l'expansion lors du chauffage, mesure entre environ 1 % et environ 15 %, de préférence entre environ 3 % et environ 10 % et/ou 0,1-3 mm, en particulier 0,2-1,8 mm.

5. Procédé pour relier des pièces structurelles en polypropylène expansé, procédé dans lequel on chauffe, par rayonnement infrarouge, uniquement des zones partielles (16) d'au moins l'une des faces de solidarisation (10, 13) des pièces structurelles (11, 12) devant être reliées, après quoi l'on presse les unes contre les autres les faces de solidarisation (10, 13) des pièces structurelles (11, 12) devant être reliées, au moins avec chevauchement partiel, en solidarisant ainsi les pièces structurelles (11, 12) par soudage, dans la région des faces de solidarisation (10, 13).

6. Procédé selon la revendication 5, **caractérisé par le fait que**, lors du chauffage de la surface, des zones partielles (18) de la face de solidarisation de la pièce structurelle (11) sont occultées, après quoi l'on presse les unes contre les autres les faces de solidarisation (10, 13) des pièces structurelles (11, 12) devant être reliées, au moins avec chevauchement partiel, en solidarisant ainsi les pièces structurelles (11, 12) par soudage, dans la région des faces de solidarisation (10, 13).

7. Procédé pour relier des pièces structurelles, selon la revendication 5 ou 6, **caractérisé par le fait que** les zones partielles chauffées (16) des faces de solidarisation (10, 13) de pièces structurelles (11, 12) devant être reliées présentent des tailles différentes.

8. Procédé pour relier des pièces structurelles, selon la revendication 6, **caractérisé par le fait qu'**on utilise, en vue d'occulter les zones partielles (18), un ou plusieurs obturateur(s) (19) interposé(s) entre les diffuseurs d'infrarouges (20) et les surfaces des pièces structurelles (11, 12), devant être chauffées.

9. Procédé pour relier des pièces structurelles, selon la revendication 8, **caractérisé par le fait que** la cote d'espacement, entre l'obturateur (19) occultant une zone partielle (18) de la surface, et ladite surface, mesure de 0 mm à environ 20 mm, de préférence entre 0 mm et environ 10 mm et, de préférence encore, environ 5 mm.

10. Procédé pour relier des pièces structurelles, selon l'une des revendications 1 à 9, **caractérisé par le fait que** la largeur de la face de solidarisation (10, 13) d'au moins l'une des pièces structurelles (11, 12) mesure au moins environ 5 mm, de préférence environ 7,5 mm dans au moins une direction spatiale.

11. Procédé pour relier des pièces structurelles, selon l'une des revendications 1 à 10, **caractérisé par le fait qu'**on utilise des pièces structurelles en polypropylène expansé, constituées par des particules de mousse ayant une part volumique en substances solides comprise, de préférence, entre environ 2 % et environ 6 %.

12. Procédé pour relier des pièces structurelles, selon l'une des revendications 1 à 11, **caractérisé par le fait qu'**au moins l'une des faces de solidarisation est produite avec surdimensionnement, en particulier lorsque la face de solidarisation, devant être chauffée, renferme des particules séparées à l'issue de l'expansion.

13. Pièce structurelle, de préférence pour la construction d'automobiles, **caractérisée par le fait qu'**elle a été produite par liaison de pièces structurelles conformément à un procédé selon au moins l'une des revendications 1 à 12.
